# EUROPÄISCHE PATENTSCHRIFT

(11) **EP 0 779 102 B1**
(45) Veröffentlichungstag und Bekanntmachung des Hinweises auf die Patenterteilung: **05.07.2000**
(21) Anmeldenummer: 96118857.0
(22) Anmeldetag: 26.11.1996
(51) Int. Cl.: B01J 31/40

(54) **Verfahren zur Wiedergewinnung von bei der Herstellung von N-Acyl-alpha-aminosäurederivaten durch Amidocarbonylierung eingesetzten Cobaltcarbonylkatalysatoren**
Process for the recovery of cobaltcarbonyl catalysts, used in the fabrication of N-acyl-alpha-aminoacid derivatives through amido carbonylation
Procédé pour la récupération de catalyseurs à base de cobalt et carbonyl dans la fabrication de dérivés de N-acyl-alpha-aminoacides par un procédé d'amido carbonylation

(30) Priorität: 07.12.1995 DE 19545641
(43) Veröffentlichungstag der Anmeldung: 18.06.1997
(73) Patentinhaber: Aventis Research & Technologies GmbH & Co. KG, 65926 Frankfurt am Main (DE)
(72) Erfinder: Bogdanovic, Sandra, Dr., 60322 Frankfurt (DE); Geissler, Holger, Dr., 65779 Kelkheim (DE); Raab, Klaus, Dr., 84508 Burgkirchen (DE); Beller, Matthias, Prof. Dr., 85737 Ismaning (DE); Fischer, Hartmut, Dr., 65719 Hofheim (DE)

(56) Entgegenhaltungen:
- EP-A- 0 343 042
- EP-A- 0 432 125
- DE-A- 3 242 374
- US-A- 4 264 515
- US-A- 4 699 999
- PATENT ABSTRACTS OF JAPAN vol. 008, no. 034 (C-210), 15.Februar 1984 & JP-A-58 198441 (DENKI KAGAKU KOGYO KK), 18.November 1983,

## Beschreibung

Unter Amidocarbonylierung versteht man die Carbonylierung von Carbonsäureamiden in Gegenwart von Aldehyden und Kohlenmonoxid bzw. Synthesegas zu N-Acyl-α-aminosäurederivaten. Diese Reaktion wird in Gegenwart von Cobaltcarbonylverbindungen als Katalysatoren durchgeführt. Durch den Einsatz von Fettsäureamiden als Amidkomponente und Formaldehyd als Aldehydkomponente kann mit diesem Verfahren die Substanzklasse der N-Acylsarkosine erschlossen werden, die als Tenside, Seifen und Emulgatoren technische Anwendung finden.

Ein wesentlicher Bestandteil eines derartigen Herstellverfahrens ist die Erarbeitung eines Katalysatorkreislaufes, d.h. eines Verfahrens zur Abtrennung des eingesetzten Katalysators von dem hergestellten Produkt, dessen Wiederaufarbeitung und dessen Rückführung in den Herstellungsprozeß.

Aus Kostengründen und zur Vermeidung von Umweltbelastungen durch Cobaltverbindungen ist ein möglichst vollständiges und dabei einfaches und kostengünstiges Wiedergewinnungsverfahren des eingesetzten Cobaltcarbonylkatalysators gefragt.

Die japanische Offenlegungsschrift Nr. 54-112816 offenbart ein Verfahren zur Herstellung von Dialkylmalonsäureestern durch Veresterung von Alkylmonohalogenessigsäure mit einen niederen aliphatischen Alkohol und Kohlenmonoxid in Gegenwart eines Cobaltcarbonylkatalysators und einer basischen Verbindung. Im Anschluß an diese Veresterung erfolgt die Zersetzung des Katalysators durch Zugabe einer wäßrigen Lösung einer anorganischen Säure, z.B. Schwefelsäure. In der so erhaltenen und abgetrennten wäßrigen Phase wird das wasserlösliche Cobaltsalz durch Zugabe von Alkalihydroxid, z.B. Natriumhydroxid, als wasserunlösliches Cobalthydroxid ausgefällt. Der Cobalthydroxidniederschlag wird gründlich gewaschen und das vorhandene Waschwasser entfernt. Abschließend erfolgt die Überführung des Cobalthydroxids in die entsprechende Cobaltcarbonylverbindung durch Behandlung mit Kohlenmonoxid oder Kohlenmonoxid/Wasserstoff in Gegenwart eines organischen Lösungsmittels, z.B. eines aromatischen Kohlenwasserstoffs oder eines für die Veresterung geeigneten Alkohols. Der auf diese Weise gewonnene Cobaltcarbonylkatalysator wird wieder zur Veresterung eingesetzt.

In der japanischen Offenlegungsschrift Nr. 57-183749 wird ein Verfahren zur Herstellung von γ-Amino-β-hydroxybutansäure beschrieben, bei dem in einem zunächst stattfindenden Carbonylierungsschritt die Umsetzung von Epichlorhydrin, Kohlenmonoxid, einer basischen Verbindung und eines Alkohols zur γ-Amino-β-hydroxybutansäure erfolgt. In dem sich anschließenden Verfahrensschritt wird der Cobaltcarbonylkatalysator durch Zugabe von Mineralsäure, z.B. Schwefelsäure und Sauerstoff zu der im vorangegangenen Verfahrensschritt erhaltenen Reaktionslösung zersetzt. Nachfolgend wird der in der Reaktionslösung vorhandene Alkohol entfernt und anschließend durch Zugabe von Wasser ein Zwei-Phasen-System hergestellt, das in eine wäßrige Phase, enthaltend das wasserlösliche Cobaltsalt und eine organische Phase, enthaltend γ-Amino-β-hydroxybutansäure, getrennt wird. Die Wiedergewinnung des Cobaltcarbonylkatalysators erfolgt durch Zugabe von Alkalimetallhydroxid zur wäßrigen Phase. Der gebildete Cobalthydroxidniederschlag wird abfiltriert, gewaschen und anschließend entwässert. Durch abschließende Umsetzung des Cobalthydroxids mit Kohlenmonoxid und Wasserstoff wird der Cobaltcarbonylkatalysator wiedergewonnen.

Die japanische Offenlegungsschrift Nr. 58-198441 betrifft ein Verfahren zur Herstellung von Malonsäurediestern, bei dem in einem zunächst stattfindenden Carbonylierungsschritt, die Umsetzung von Monochloressigsäure, Kohlenmonoxid, Natriumcarbonat und einem Alkohol in Gegenwart eines in Alkohol oder Aceton gelösten Cobaltcarbonylkatalysators erfolgt. Im anschließenden Verfahrensschritt erfolgt die Zersetzung des Cobaltcarbonylkatalysators durch Zugabe von Schwefelsäure und Sauerstoff zu der vorhergehend erhaltenen Reaktionslösung. Der überschüssige Alkohol bzw. Aceton wir durch Destillation entfernt. Zu der konzentrierten Reaktionslösung wird Wasser hinzugegeben und die so erhaltene wäßrige und organische Phase getrennt weiterverarbeitet, wobei aus der organischen Phase der Malonsäurediester durch Destillation erhalten wird. Die wäßrige, Cobaltsulfat enthaltende Phase wird durch Zugabe von Alkalimetallhydroxid alkalisiert und der erhaltene Cobalthydroxidniederschlag gewaschen, abfiltriert und das vorhandene Wasser entfernt, z.B. durch Sprühtrocknung. Abschließend wird das getrocknete Cobalthydroxid durch Umsetzung mit Kohlenmonoxid und Wasserstoff in Alkohol oder Aceton in die entsprechende Lösung eines Cobaltcarbonylkatalysators überführt.

Gegenstand der EP-A-0 343 042 ist ein Verfahren zur Herstellung von Dialkylmalonsäureester durch Carbonylierung von Chloressigsäurealkylester in Gegenwart eines Cobaltcarbonylkatalysators. Die Rückgewinnung des eingesetzten Cobaltcarbonylkatalysators erfolgt in mehreren Verfahrensschritten, wobei zunächst durch Säurezugabe ein wasserlösliches Cobaltsalz hergestellt wird. Im nächsten Verfahrensschritt wird dieses Cobaltsalz in das Salz einer Fettsäure, z.B. Ölsäure, Palmitinsäure oder Stearinsäure, überführt. Aus diesem Fettsäuresalz wir durch Umsetzung mit Kohlenmonoxid und Wasserstoff der gewünschte Cobaltcarbonylkatalysator erhalten.

Die vorgenannten Verfahren des Standes der Technik sind aus den nachfolgend genannten Gründen zur Wiedergewinnung von bei der Herstellung von N-Acyl-α-aminosäurederivaten durch Amidocarbonylierung eingesetzten Cobaltkatalysatoren nicht geeignet.

Aufgabe der vorliegenden Erfindung ist es, ein Verfahren zur Wiedergewinnung von bei der Herstellung von N-Acyl-α-aminosäurederivaten durch Amidocarbonylierung eingesetzten Cobaltcarbonylkatalysatoren zur Verfügung zu stellen.

Bei einem derartigen Verfahren sind im Fall der N-Acyl-α-aminosäurederivate folgende technische Schwierigkeiten zu berücksichtigen.

Die Reaktionsprodukte der Amidocarbonylierung, insbesondere die bereits erwähnten N-Acylsarkosine, sind nicht flüchtig und können daher nicht destillativ aus der Reaktionslösung entfernt werden. Eine destillative Abtrennung der in reiner Form flüchtigen Cobaltcarbonylkatalysatoren ist ebenfalls nicht möglich, da diese beim Erhitzen der Reaktionslösung, d.h. in Gegenwart von N-Acyl-α-aminosäurederivaten, zerstört werden. Ebenso gilt es zu beachten, daß die zur Amidocarbonylierung eingesetzten Cobaltcarbonylkatalysatoren nach der Umsetzung nur noch zum Teil als aktive Cobaltcarbonylkatalysatoren vorliegen und damit das Verfahren zur Wiedergewinnung eine Anzahl verschiedener Cobaltcarbonylverbindungen zu berücksichtigen hat.

Die Cobaltcarbonylkatalysatoren lassen sich, im Unterschied zur Hydroformylierung, aufgrund der milden Reaktionsbedingungen während der Carbonylierungsstufe der Amidocarbonylierung nicht aus Co-(II)-salzen, z.B. Cobaltacetat, Cobaltoxid und Cobalthydroxid, herstellen, sondern müssen in einem vorgeschalteten Verfahrensschritt hergestellt werden, um in der nachfolgenden Carbonylierungsstufe eingesetzt werden zu können.

Gegenstand der vorliegenden Erfindung ist ein Verfahren zur Wiedergewinnung von bei der Herstellung von N-Acyl-α-aminosäurederivaten, insbesondere N-Acylsarkosinen, durch Amidocarbonylierung eingesetzten Cobaltcarbonylkatalysatoren umfassend die Verfahrensschritte:
- Zugabe von wäßriger Wasserstoffperoxidlösung oder Zugabe von wäßriger Wasserstoffperoxidlösung und Schwefelsäure zu der nach der Herstellung des N-Acyl-α-aminosäurederivats vorliegenden Reaktionslösung,
- danach Abtrennen der wäßrigen, wasserlösliches Cobalt-(II)-sulfat enthaltenden Phase von der nicht-wäßrigen Phase,
- anschließend Entfernen von überschüssigem Wasserstoffperoxid aus der, aus dem vorangegangenen Verfahrensschritt erhaltenen, wäßrigen Phase,
- nachfolgend Zugabe von Alkalimetallhydroxid zu der wäßrigen Phase des vorangegangenen Verfahrensschrittes,
- danach Abtrennen des erhaltenen Cobalthydroxidniederschlages, Waschen mit Wasser und
- darauf folgend Herstellen einer cobalthaltigen Schmelze aus dem gewaschenen Cobalthydroxid und dem N-Acyl-α-aminosäurederivat, zu dessen Herstellung der Cobaltcarbonylkatalysator vorgesehen ist und
- abschließend Überführung der so erhaltenen cobalthaltigen Schmelze in Gegenwart eines Gemisches aus Kohlenmonoxid und Wasserstoff, bei einer Temperatur von 70 bis 250°C und einem Druck von 50 bis 250 bar in den Cobaltcarbonylkatalysator.

Bei dem erfindungsgemäßen Verfahren sollen die bei der Amidocarbonylierung eingesetzten Cobaltcarbonylkatalysatoren, insbesondere Co₂(CO)₈ und HCo(CO)₄, wiedergewonnen werden. Ausgangspunkt für dieses Verfahren ist die nach der Herstellung des N-Acyl-α-aminosäurederivates, insbesondere des N-Acylsarkosins, vorliegende Reaktionslösung. Besonders geeignet ist das erfindungsgemäße Verfahren für Reaktionslösungen, die entsprechend dem in der europäischen Patentanmeldung Nr. 95 106 329.6 (EP-A-0 680 948) beschriebenen Verfahren zur Herstellung von N-Acyl-α-aminosäurederivaten erhalten werden.

In dem ersten Verfahrensschritt erfolgt die Zugabe wäßriger Wasserstoffperoxidlösung zu dieser Reaktionslösung. Ist die Amidocarbonylierung in schwefelsaurer Lösung erfolgt, so ist im allgemeinen der Zusatz weiterer Schwefelsäure, bevorzugt verdünnter Schwefelsäure, zur Bildung wasserlöslicher Cobaltsalze nicht erforderlich.

Die damit erhaltene wäßrige, wasserlösliches Co-(II)-sulfat enthaltende Phase wird von der nicht-wäßrigen Phase abgetrennt. Durch eine wiederholte Zugabe von Wasser oder wäßriger Schwefelsäure zu der nicht-wäßrigen, das N-Acyl-α-aminosäurederivat enthaltenden Phase, gegebenenfalls in entsprechenden Extraktionsapparaten, z.B. Mixer-Settler, Zentrifugalextraktor und Gegenstromextraktionskolonne, läßt sich der Cobaltgehalt dieser nicht-wäßrigen Phase weiter verringern. Es hat sich gezeigt, daß Anteile an Wasserstoffperoxid unter Fällungsbedingungen zur Bildung von wasserhaltigem Cobalt-(III)-hydroxid führen, das in alkalischem Milieu stabil ist, aber als sehr feiner, schlecht filtrierbarer Niederschlag anfällt. Das Entfernen von überschüssigem Wasserstoffperoxid erfolgt üblicherweise durch Erhitzen der wäßrigen Phase, bevorzugt bis zur Siedetemperatur. Technisch vorteilhaft ist das Erhitzen der wäßrigen Phase unter vermindertem Druck und gleichzeitigem Abdestillieren von Lösungsmittel.

Nach dem Entfernen des überschüssigen Wasserstoffperoxids erfolgt die Zugabe von Alkalimetallhydroxid, bevorzugt Natrium- und/oder Kaliumhydroxid, zu der wäßrigen Phase. Durch diese Zugabe wird ein wasserunlöslicher Niederschlag an Cobalthydroxid erhalten. Bevorzugt erfolgt die Zugabe von 30 gew.-%iger, wäßriger Alkalimetallydroxidlösung. Der pH-Wert der wäßrigen Phase am Ende der Zugabe des Alkalimetallhydroxids sollte bevorzugt ungefähr 12 betragen. Bei der Fällung ist es vorteilhaft, daß die Cobaltsulfatlösung eine Konzentration von 2 Gew.-% nicht überschreitet, da sonst keine vollständige Fällung in Form des Cobalthydroxids erreicht wird.

Dieser wasserunlösliche Cobalthydroxidniederschlag wird von der wäßrigen Phase abgetrennt. Im allgemeinen enthält der Niederschlag zwischen 8 und 12 Gew.-% Cobalt, ungefähr 70 Gew.-% Wasser (ermittelt durch Vakuumtrocknung bei 90°C) und ungefähr 10 Gew.-% Sulfatsalz. Durch anschließendes Waschen mit Wasser werden die wasserlöslichen Salze entfernt, ohne daß hierbei ein signifikanter Austrag von Cobaltionen mit dem Waschwasser erfolgt. Für das erfindungsgemäße Verfahren ist es von Vorteil, wenn der Cobalthydroxidniederschlag weitestgehend salzfrei ist.

Im darauffolgenden Verfahrensschritt erfolgt die Herstellung einer cobalthaltigen Schmelze aus dem gewaschenen Cobalthydroxidniederschlag und dem N-Acyl-α-aminosäurederivat, zu dessen Herstellung der Cobaltcarbonylkatalysator verwendet wird. Bei diesem Vorgang wird das gewaschene Cobalthydroxid bevorzugt in die Schmelze des N-Acyl-α-aminosäurederivats eingebracht. Bevorzugt handelt es sich bei diesen Derivaten um N-Acylsarkosine, besonders Fettsäuresarkosine, wie Oleoyl- oder Lauroylsarkosin. Bevorzugt erfolgt die Herstellung der cobalthaltigen Schmelze durch Umsetzung von Cobalthydroxid, bevorzugt mit einem Wassergehalt von 65-75 Gew.-% Wasser, mit dem N-Acyl-α-aminosäurederivat im Molverhältnis 1:2-5, bevorzugt 1:3-4. Die Umsetzung des Cobalthydroxids mit dem N-Acyl-α-aminosäurederivat findet üblicherweise bei 100 bis 120°C statt. Dabei kann es zur Bildung von Cobalthydroxidzusammenballungen kommen, die nur langsam weiterreagieren. Durch Zusatz katalytischer Mengen Essigsäure zu dem aufgeschlämmten Cobalthydroxid läßt sich diese Schwierigkeit beheben.
Durch Umsetzung von Cobalthydroxid mit dem N-Acyl-α-aminosäurederivat wird eine cobalthaltige Schmelze hergestellt, die unter reduziertem Druck und bei erhöhter Temperatur vollständig vom Wasser befreit werden kann, ohne daß hierbei trockene Cobaltsalze erzeugt werden.

Die Überführung der so erhaltenen cobalthaltigen Schmelze in den Cobaltcarbonylkatalysator wird bevorzugt in einem polar-aprotischen Lösungsmittel durchgeführt, da es auch bei der nachfolgenden Amidocarbonylierung als Lösungsmittel verwendet werden kann. Als besonders geeignet haben sich Tetrahydrofuran, Glykoldimethylether, Tertiärbutylmethylether, Diglykoldimethylether, Dimethylformamid, Dimethylacetamid, Essigsäurebutylester und Acetonitril erwiesen. Insbesondere werden Tetrahydrofuran, Tertiärbutylmethylether und Glykoldimethylether eingesetzt. Hierzu wird die cobalthaltige Schmelze mit Kohlenmonoxid oder einen Gemisch aus Kohlenmonoxid und Wasserstoff, sogenanntes Synthesegas, bei einer Temperatur von 70 bis 250°C und einem Druck von 50 bis 250 bar, bevorzugt 60 bis 200 bar, besonders bevorzugt 80 bis 180 bar umgesetzt. Die Zusammensetzung des Kohlenmonoxid/Wasserstoff-Gemisches ist bevorzugt 4:1 bis 1:4. Der gebildete Cobaltcarbonylkatalysator ist für die Amidocarbonylierung uneingeschränkt einsetzbar.

### Herstellungsbeispiel

### Wiedergewinnung von bei der Herstellung von Lauroylsarkosin durch Amidocarbonylierung eingesetztem Cobaltcarbonylkatalysator

100 ml einer durch Abtrennung von der organischen Phase resultierende schwefelsaure, noch Reste von Wasserstoffperoxid enthaltende Cobaltsulfatlösung mit 1,56 Gew.-% Co wird zunächst durch Erhitzen auf Siedetemperatur von Wasserstoffperoxid befreit.
Nach Abkühlen dieser schwefelsauren Lösung wird durch Zugabe von 12 ml 30 gew.-%iger Natriumhydroxidlösung ein pH-Wert von 12 eingestellt, wobei Cobalthydroxid in Form eines blaugrünen, stark wasserhaltigen Niederschlages (20,0 g) anfällt.
Der Niederschlag wird über eine G3-Filterfritte abgesaugt und mit 200 ml Wasser weitgehend sulfatfrei gewaschen. Das stark wasserhaltige Cobalthydroxid (18,2 g) wird in 29,0 g Lauroylsarkosin (ca. 4 Mol-Äquivalente) aufgeschlemmt und die zähflüssige Suspension unter Rühren auf 120°C erhitzt. Das Cobalthydroxid geht mit violetter Farbe in Lösung.
Nach vollständigem Auflösen des Cobalthydroxidniederschlags wird die cobalthaltige Schmelze am Rotationsverdampfer von dem vorhandenen Wasser befreit (Wasserbadtemperatur: 95°C, Druck: 50 mbar). Anschließend wird der Rückstand (29,7 g) in 30 ml Methyl-t-butylether gelöst und im Stahlautoklaven bei 120 bar Druck mit Synthesegas (Verhältnis CO: H₂ = 2:1) carbonyliert. Die Reaktion springt zwischen 70 und 90°C an. Das gebildete Cobaltcarbonyl ist für die Amidocarbonylierung zu Lauroylsarkosin uneingeschränkt einsetzbar.

## Patentansprüche

1. Verfahren zur Wiedergewinnung von bei der Herstellung von N-Acyl-α-aminosäurederivaten, insbesondere N-Acylsarkosinen, durch Amidocarbonylierung eingesetzten Cobaltcarbonylkatalysatoren umfassend die Verfahrensschritte:
- Zugabe von wäßriger Wasserstoffperoxidlösung oder Zugabe von wäßriger Wasserstoffperoxidlösung und Schwefelsäure zu der nach der Herstellung des N-Acyl-α-aminosäurederivats vorliegenden Reaktionslösung,
- danach Abtrennen der wäßrigen, wasserlösliches Cobalt-(II)-sulfat enthaltenden Phase von der nicht-wäßrigen Phase,
- anschließend Entfernen von überschüssigem Wasserstoffperoxid aus der, aus dem vorangegangenen Verfahrensschritt erhaltenen, wäßrigen Phase,
- nachfolgend Zugabe von Alkalimetallhydroxid zu der wäßrigen Phase des vorangegangenen Verfahrensschrittes,
- danach Abtrennen des erhaltenen Cobalthydroxidniederschlages, Waschen mit Wasser und
- darauf folgend Herstellen einer cobalthaltigen Schmelze aus dem gewaschenen Cobalthydroxidniederschlag und dem N-Acyl-α-aminosäurederivat, zu dessen Herstellung der Cobaltcarbonylkatalysator vorgesehen ist und
- abschließend Überführung der so erhaltenen cobalhaltigen Schmelze in Gegenwart eines Gemisches aus Kohlenmonoxid und Wasserstoff, bei einer Temperatur von 70 bis 250°C und einem Druck von 50 bis 250 bar in den Cobaltcarbonylkatalysator.

2. Verfahren nach Anspruch 1, dadurch gekennzeichnet, daß zum Entfernen des überschüssigen Wasserstoffperoxids die wässrige Phase erhitzt wird, bevorzugt bis zur Siedetemperatur.

3. Verfahren nach Anspruch 1 oder 2, dadurch gekennzeichnet, daß Natriumhydroxid oder Kaliumhydroxid oder eine Mischung davon zu der wäßrigen Phase zugegeben wird.

4. Verfahren nach einem der Ansprüche 1 bis 3, dadurch gekennzeichnet, daß die Zugabe von 30 gew.-%iger, wäßriger Alkalimetallhydroxidlösung zu der wäßrigen Phase erfolgt.

5. Verfahren nach einem der Ansprüche 1 bis 4, dadurch gekennzeichnet, daß der pH-Wert der wäßrigen Phase am Ende der Zugabe des Alkalimetallhydroxids ungefähr 12 beträgt.

6. Verfahren nach einem der Ansprüche 1 bis 5, dadurch gekennzeichnet, daß zur Herstellung der cobalthaltigen Schmelze das gewaschene Cobalthydroxid in die Schmelze eines N-Acyl-α-aminosäurederivats eingebracht wird.

7. Verfahren nach einem der Ansprüche 1 bis 6, dadurch gekennzeichnet, daß das gewaschene Cobalthydroxid einen Wassergehalt von 65-75 Gew.-% Wasser besitzt.

8. Verfahren nach einem der Ansprüche 1 bis 7, dadurch gekennzeichnet, daß als N-Acyl-α-aminosäurederivat ein N-Acylsarkosin, bevorzugt ein Fettsäuresarkosin eingesetzt wird.

9. Verfahren nach einem der Ansprüche 1 bis 8, dadurch gekennzeichnet, daß zur Herstellung der cobalthaltigen Schmelze das Molverhältnis zwischen Cobalthydroxid und N-Acyl-α-aminosäurederivat 1:2-5, bevorzugt 1:3-4, beträgt.

10. Verfahren nach einem der Ansprüche 1 bis 9, dadurch gekennzeichnet, daß die cobalthaltige Schmelze vor der Überführung in den Cobaltcarbonylkatalysator von dem vorhandenen Wasser befreit wird.

11. Verfahren nach einem der Ansprüche 1 bis 10, dadurch gekennzeichnet, daß die Überführung der cobalthaltigen Schmelze in den Cobaltcarbonylkatalysator in einem polar-aprotischen Lösungsmittel durchgeführt wird.

12. Verfahren nach einem der Ansprüche 1 bis 11, dadurch gekennzeichnet, daß die Überführung der cobalthaltigen Schmelze in den Cobaltcarbonylkatalysator bei einem Druck von 60 bis 200 bar, bevorzugt 80 bis 180 bar erfolgt.

13. Verfahren nach einem der Ansprüche 1 bis 12, dadurch gekennzeichnet, daß zur Überführung der cobalthaltigen Schmelze in den Cobaltcarbonylkatalysator die Zusammensetzung des Kohlenmonoxid/Wasserstoff-Gemisches 4:1 bis 1:4 beträgt.

## Claims

1. A process for recovering cobalt carbonyl catalysts used in the preparation of N-acyl-α-amino acid derivatives, in particular N-acylsarcosines, by amidocarbonylation, which comprises the process steps:
- addition of aqueous hydrogen peroxide solution or addition of aqueous hydrogen peroxide solution and sulfuric acid to the reaction solution present after the preparation of the N-acyl-α-amino acid derivative,
- subsequent separation of the aqueous phase containing water-soluble cobalt(II) sulfate from the nonaqueous phase,
- subsequent removal of excess hydrogen peroxide from the aqueous phase obtained from the previous process step,
- subsequent addition of alkali metal hydroxide to the aqueous phase of the previous process step,
- subsequent removal of the cobalt hydroxide precipitate obtained, washing with water and
- subsequent preparation of a cobalt-containing melt from the washed cobalt hydroxide precipitate and the N-acyl-α-amino acid derivative for whose preparation the cobalt carbonyl catalyst is intended and
- final conversion of the cobalt-containing melt thus obtained into the cobalt carbonyl catalyst in the presence of a mixture of carbon monoxide and hydrogen, at a temperature of from 70 to 250°C and a pressure of from 50 to 250 bar.

2. The process as claimed in claim 1, wherein the excess hydrogen peroxide is removed by heating the aqueous phase, preferably to the boiling point.

3. The process as claimed in claim 1 or 2, wherein sodium hydroxide or potassium hydroxide or a mixture thereof is added to the aqueous phase.

4. The process as claimed in any of claims 1 to 3, wherein 30% strength by weight aqueous alkali metal hydroxide solution is added to the aqueous phase.

5. The process as claimed in any of claims 1 to 4, wherein the pH of the aqueous phase at the end of the addition of the alkali metal hydroxide is about 12.

6. The process as claimed in any of claims 1 to 5, wherein the cobalt-containing melt is prepared by introducing the washed cobalt hydroxide into the melt of an N-acyl-α-amino acid derivative.

7. The process as claimed in any of claims 1 to 6, wherein the washed cobalt hydroxide has a water content of 65-75% by weight of water.

8. The process as claimed in any of claims 1 to 7, wherein the N-acyl-α-amino acid derivative is an N-acylsarcosine, preferably a fatty acid sarcosine.

9. The process as claimed in any of claims 1 to 8, wherein, for the preparation of the cobalt-containing melt, the molar ratio between cobalt hydroxide and N-acyl-α-amino acid derivative is 1:2-5, preferably 1:3-4.

10. The process as claimed in any of claims 1 to 9, wherein the cobalt-containing melt is freed of the water present before conversion into the cobalt carbonyl catalyst.

11. The process as claimed in any of claims 1 to 10, wherein the conversion of the cobalt-containing melt into the cobalt carbonyl catalyst is carried out in a polar aprotic solvent.

12. The process as claimed in any of claims 1 to 11, wherein the conversion of the cobalt-containing melt into the cobalt carbonyl catalyst is carried out at a pressure of from 60 to 200 bar, preferably from 80 to 180 bar.

13. The process as claimed in any of claims 1 to 12, wherein the composition of the carbon monoxide/hydrogen mixture used for converting the cobalt-containing melt into the cobalt carbonyl catalyst is from 4:1 to 1:4.

## Revendications

1. Procédé de récupération de catalyseurs au carbonyle de cobalt utilisés dans la préparation de dérivés de N-acyl-α-aminoacide, en particulier des N-acylsarcosines, comprenant les opérations de base suivantes :
- Ajout de solution aqueuse de peroxyde d'hydrogène ou ajout de solution aqueuse de peroxyde d'hydrogène et d'acide sulfurique à la solution réactionnelle présente après la préparation du dérivé d'acide N-acyl-α-aminé,
- ajout de solution aqueuse de peroxyde d'hydrogène ou ajout de solution aqueuse de peroxyde d'hydrogène et d'acide sulfurique à la solution réactionnelle obtenue après la préparation du dérivé de N-acyl-α-aminoacide,
- ensuite séparation de la phase aqueuse contenant le sulfate de cobalt(II) hydrosoluble et de la phase non aqueuse,
- ensuite élimination de l'excès en peroxyde d'hydrogène à partir de la phase aqueuse obtenue dans l'opération précédente,
- ensuite l'ajout d'un hydroxyde de métal alcalin à la phase aqueuse obtenue dans l'opération précédente,
- ensuite séparation du dépôt d'hydroxyde de cobalt obtenu, lavage à l'eau et
- ensuite préparation d'une matière fondue contenant le cobalt à partir de l'hydroxyde de cobalt lavé et du dérivé de N-acyl-α-aminoacide, le catalyseur au carbonyle de cobalt ayant étant prévu pour la préparation de ce dérivé, puis transformation de la matière fondue contenant le cobalt ainsi obtenue en présence d'un mélange de monoxyde de carbone et d'hydrogène, à une température de 70 à 250°C et sous une pression de 50 à 250 bars en le catalyseur au carbonyle de cobalt.

2. Procédé selon la revendication 1, caractérisé en ce que, pour éliminer l'excès en peroxyde d'hydrogène, on chauffe la phase aqueuse, de préférence jusqu'au point d'ébullition.

3. Procédé selon la revendication 1 ou 2, caractérisé en ce qu'on ajoute à la phase aqueuse l'hydroxyde de sodium ou l'hydroxyde de potassium ou leur mélange.

4. Procédé selon l'une des revendications 1 à 3, caractérisé en ce qu'on ajoute à la phase aqueuse la solution aqueuse à 30% d'hydroxyde de métal alcalin.

5. Procédé selon l'une des revendications 1 à 4, caractérisé en ce que la valeur du pH de la phase aqueuse est d'environ 12 à la fin de l'ajout de l'hydroxyde de métal alcalin.

6. Procédé selon l'une des revendications 1 à 5, caractérisé en ce que pour préparer la matière fondue contenant le cobalt, on introduit l'hydroxyde de cobalt lavé dans le dérivé d'acide N-acyl-α-aminé fondu.

7. Procédé selon l'une des revendications 1 à 6, caractérisé en ce que l'hydroxyde de cobalt lavé présente une teneur en eau de 65 à 75% massiques d'eau.

8. Procédé selon l'une des revendications 1 à 7, caractérisé en ce qu'on utilise une N-acylsarcosine, de préférence une sarcosine d'acides gras, comme dérivé de N-acyl-α-aminoacide.

9. Procédé selon l'une des revendications 1 à 8, caractérisé en ce que pour la préparation de la matière fondue contenant le cobalt, le rapport molaire entre l'hydroxyde de cobalt et le dérivé de N-acyl-α-aminoacide est de 1:2 à 5, de préférence de 1:3 à 4.

10. Procédé selon l'une des revendications 1 à 9, caractérisé en ce qu'on débarrasse de l'eau présente la matière fondue contenant le cobalt avant sa transformation en le catalyseur au carbonyle de cobalt.

11. Procédé selon l'une des revendications 1 à 10, caractérisé en ce qu'on met en oeuvre la transformation de la matière fondue contenant le cobalt en le catalyseur au carbonyle de cobalt dans un solvant polaire-aprotique.

12. Procédé selon l'une des revendications 1 à 11, caractérisé en ce qu'on met en oeuvre la transformation de la matière fondue contenant le cobalt en le catalyseur au carbonyle de cobalt sous une pression de 60 à 200 bars, de préférence de 80 à 180 bars.

13. Procédé selon l'une des revendication 1 à 12, caractérisé en ce que, pour transformer la matière fondue contenant le cobalt en le catalyseur au carbonyle de cobalt, la composition du mélange de monoxyde de carbone/hydrogène est de 4:1 à 1:4.
